# EUROPÄISCHE PATENTSCHRIFT

(11) **EP 3 048 322 B1**
(45) Veröffentlichungstag und Bekanntmachung des Hinweises auf die Patenterteilung: **28.02.2018**
(21) Anmeldenummer: 15200298.6
(22) Anmeldetag: 16.12.2015
(51) Int. Cl.: F16D 13/75, F16D 13/70

(54) **DREHSCHWINGUNGSDÄMPFER MIT NACHSTELLEINRICHTUNG**
TORSIONAL VIBRATION DAMPER WITH ADJUSTMENT DEVICE
AMORTISSEUR DE VIBRATION EN TORSION AVEC DISPOSITIF DE RATTRAPAGE

(30) Priorität: 20.01.2015 DE 102015200759
(43) Veröffentlichungstag der Anmeldung: 27.07.2016
(73) Patentinhaber: Schaeffler Technologies AG & Co. KG, 91074 Herzogenaurach (DE)
(72) Erfinder: Finkenzeller, Marc, 77723 Gengenbach (DE); Heuberger, Sebastian, 77815 Bühl (DE)

(56) Entgegenhaltungen:
- WO-A1-2015/188822
- WO-A2-2015/144154
- DE-A1- 10 155 146
- DE-A1-102011 087 994
- DE-T1- 19 980 193

## Beschreibung

Die Erfindung betrifft einen Drehschwingungsdämpfer, insbesondere Einmassenschwungrad oder Zweimassenschwungrad, mit einer weggesteuerten Nachstelleinrichtung zum Nachstellen eines verschleißbedingten Fehlabstands einer Anpressplatte zu einer Gegenplatte einer Reibungskupplung eines Kraftfahrzeugs, wobei die Nachstelleinrichtung eine Spindelwelle mit einem Spindelwellengewinde, eine mit dem Spindelwellengewinde der Spindelwelle zusammenwirkende Spindelmutter, die infolge einer Verdrehung der Spindelwelle translatorisch bewegbar ist, ein Antriebsritzel zum Antreiben der Spindelwelle, eine mit der Anpressplatte zusammenwirkende und mit dieser axial bewegbare Antriebsklinke zum weggesteuerten Antreiben des Antriebsritzels und eine Aufnahme für die Spindelwelle aufweist, die die Spindelwelle axial fixiert, wobei die Spindelmutter mit einem Nachstellring wirkverbunden ist, der um eine quer zur Spindelwelle ausgerichtete Rotationsachse der Kupplung verdrehbar und infolge einer Verdrehung um diese Rotationsachse zum Nachstellen des verschleißbedingten Fehlabstand in Richtung der Rotationsachse der Kupplung positionierbar ist. Die Erfindung betrifft des Weiteren eine Kupplung mit einem solchen Drehschwingungsdämpfer. Die europäische Patentanmeldung EP 3 109 497 der Anmelderin zeigt ein Drehschwingungsdämpfer, insbesondere Einmassenschwungrad oder Zweimassenschwungrad mit einer Nachstelleinrichtung zum Nachstellen eines verschleißbedingten Fehlabstands einer Anpressplatte zu einer Gegenplatte einer Reibungskupplung eines Kraftfahrzeugs. Anders ausgedrückt zeigt diese Anmeldung die Möglichkeit, eine wegbasierte Verschleißnachstelleinrichtung, zum Beispiel in Form einer TAC-Spindel, auf Seiten einer Gegendruckplatte, insbesondere auf Seiten eines Einmassenschwungrads oder auf Seiten der Sekundärmasse eines Zweimassenschwungrads, anzuordnen. Bei dieser Nachstelleinrichtung ist eine Spindelmutter direkt an einen Verstellring angebunden. Aufgrund von radialem Versatz zwischen einer Anbindung der Spindelmutter an den Verstellring und der Spindelachse ist die Spindelmutter mit einem Mitnehmer ausgeführt. Dieser bildet einen Hebelarm aus, weshalb die Spindelmutter unter Krafteinwirkung verkippen und den Nachstellmechanismus verklemmen kann. Im Ergebnis kann eine einwandfreie Funktion des Nachstellsystems nicht sicher gewährleistet werden. Die internationale Patentanmeldung WO 2015/144154 der Anmelderin zeigt einen Spindeltrieb für eine weggesteuerte Nachstelleinrichtung, aufweisend eine Spindelwelle mit einem Schneckentrieb, eine Spindelmutter, die mittels des Schneckentriebs der Spindelwelle infolge einer Verdrehung der Spindelwelle translatorisch bewegbar ist, ein Antriebsritzel zum Antreiben der Spindelwelle, eine an einem Kupplungsdeckel befestigbare Antriebsklinke zum weggesteuerten Antreiben des Antriebsritzels, eine Aufnahme für die Spindelwelle, die die Spindelwelle axial fixiert, und ein Übertragungselement, eingerichtet die translatorische Bewegung der Spindelmutter auf einen um eine quer zur Spindelwelle ausgerichtete Rotationsachse verdrehbaren Nachstellring zu übertragen, wobei das Übertragungselement ein um die Rotationsachse verkippbares Blechelement umfasst, über welches im Zusammenbau die Übertragungskraft von der Spindelmutter auf den Nachstellring zentral auf die Spindelmutter einleitbar ist.

Nach der internationalen Patentanmeldung WO 2015/188822 der Anmelderin kann bei einem ähnlichem Spindeltrieb, ein Zuganker des betriebsgemäß angeordneten Übertragungselementes in einer Ausnehmung des Nachstellringes einliegen und zusammen mit der Ausnehmung einen formschlüssigen Eingriff bilden.

Schließlich zeigt die internationale Patentanmeldung WO 2015/144164 der Anmelderin eine Nachstelleinrichtung für eine Reibkupplung, aufweisend eine Antriebsspindel mit einer Spindelachse, mit einem entlang der Spindelachse ausgerichteten Spindeltrieb, mit einem Antriebsritzel zum Verdrehen der Antriebsspindel um die Spindelachse und mit einer Spindelmutter auf dem Spindeltrieb, wobei die auf dem Spindeltrieb montierte Spindelmutter infolge einer Verdrehung des Spindeltriebs eine translatorische Bewegung entlang der Spindelachse ausführt, einen um eine Rotationsachse verdrehbaren Nachstellring mit zumindest einer Rampe zum Ausgleichen einer verschleißbedingten Veränderung eines Rückwegs einer Anpressplatte, wobei die Rotationsachse im Zusammenbau quer zur Spindelachse ausgerichtet ist, ein biegeelastisches Zugelement zur Verbindung der Spindelmutter mit dem Nachstellring, wobei mittels des Zugelements eine Nachstellkraft geneigt zur Spindelachse in den Nachstellring einleitbar ist. Die deutsche Patentanmeldung DE 10 2011 087 994 der Anmelderin zeigt einen gattungsgemäßen Drehschwingungsdämpfer mit Nachstelleinrichtung.

Ausgehend von dem vorgenannten Stand der Technik ist Aufgabe der vorliegenden Erfindung, einen Drehschwingungsdämpfer sowie eine Kupplung mit einem solchen Drehschwingungsdämpfer zu schaffen, die bzw. der die genannten Nachteile nicht aufweist und insbesondere ein Verklemmen der Nachstelleinrichtung vermeidet. Des Weiteren soll eine Kupplung geschaffen werden, bei der eine nicht verklemmende Nachstelleinrichtung zum Ausgleich von verschleißbedingtem Axialspiel auf Seiten der Gegendruckplatte vorgesehen ist.
Diese Aufgabe wird bei einem gattungsgemäßen Drehschwingungsdämpfer erfindungsgemäß dadurch gelöst, dass die Spindelmutter mittels eines Übertragungselement mit dem Nachstellring derart wirkverbunden ist, dass Zugkräfte in Richtung der Spindelwellenachse auf die Spindelmutter übertragbar sind, Drehmomente quer zur Spindelwellenachse sowie derartige Drehmomente erzeugende Kräfte jedoch nicht auf die Spindelmutter übertragbar sind. Erfindungsgemäß ist ein erster Flansch des Übertragungselements und eine Stirnseite der Spindelmutter sphärisch oder teilsphärisch oder teilzylindermantelförmig ausgebildet und/oder der erste Flansch flexibel ausgebildet und/oder der erste Flansch flexibel mittels eines Gelenks am Übertragungselement angeordnet. Die Aufgabe wird nach der Erfindung des Weiteren gelöst durch eine Kupplung, insbesondere Reibkupplung, mit einem erfindungsgemäßen Drehschwingungsdämpfer, insbesondere gemäß der vorliegenden Beschreibung und/oder nach einem der angehängten Ansprüche. Infolge der Erfindung kann die Spindelmutter auf der Spindelwelle stets frei rotieren und verklemmt nicht durch Kippen. Anders ausgedrückt wird mittels der Erfindung sichergestellt, dass die Rotationsachse der Spindelmutter stets parallel zur Spindelwellenachse ist. Erfindungsgemäß ist ein Drehschwingungsdämpfer, insbesondere ein Schwungrad vorgesehen mit einer Nachstelleinrichtung zum Nachstellen eines verschleißbedingten Fehlabstands einer Anpressplatte zu einer Gegenplatte einer Reibungskupplung eines Kraftfahrzeugs. Bei einer Kupplung nach der Erfindung mit einem solchen Drehschwingungsdämpfer ist die Nachstelleinrichtung nicht auf Seiten der Anpressplatte, wie bei bekannten Kupplungen üblich, sondern auf Seiten der Gegenplatte, insbesondere in einem Drehschwingungsdämpfer angeordnet. Der Drehschwingungsdämpfer kann beispielsweise als Einmassenschwungrad oder Zweimassenschwungrad ausgestaltet sein.

Durch den Einsatz des Übertragungselements wird die für die Nachstellung des Nachstellrings erforderliche Verdrehkraft zentral oder symmetrisch um die Spindelmutterachse verteilt auf die Spindelmutter übertragen. Das Übertragungselement und die Spindelmutter sind insbesondere derart aufeinander abgestimmt und eingerichtet, dass eine zwischen Spindelmutter und Übertragungselement wirkende Kraft zentral oder symmetrisch um die Spindelmutterachse verteilt in die Spindelmutter eingeleitet wird. Infolgedessen wirken keine Kräfte, Kraftpaare und Momente auf die Spindelmutter, die deren Verkippen quer zur Spindelwellenachse hervorrufen. Derartige Kräfte, Kraftpaare und Momente werden, wenn überhaupt, nur derart auf die Spindelmutter übertragen, dass sie sich in ihrer ein unerwünschtes Verkippen der Spindelmutter hervorrufenden Wirkung gegenseitig aufheben. Somit kann ein Verkippen der Spindelmutter relativ zur Spindelwelle und damit ein Verklemmen des Stellantriebs zuverlässig vermieden werden, wodurch der Wirkungsgrad des Spindeltriebs steigt.

Ein weiterer Vorteil der Erfindung ist, dass die Führungslänge der Spindelmutter auf der Spindelwelle kürzer als bei bekannten Lösungen ausgeführt werden kann. Grund hierfür ist, dass Kräfte oder Momente zwischen Übertragungselement und Spindelmutter, die ein Kippmoment der Spindelmutter gegenüber der Spindelwelle hervorrufen könnten, nicht in die Spindelmutter eingeleitet werden. Derartige Kräfte und Momente müssen daher nicht durch einen entsprechend langen Sitz der Spindelmutter auf der Spindelwelle aufgefangen werden. Im Ergebnis können sowohl die Spindelmutter als auch die Spindelwelle kürzer ausgeführt werden, was insgesamt zu Vorteilen bezüglich der Bauteilfestigkeit unter Drehzahl führt.

Um eine weggesteuerte Nachstellung der Kupplung bei Verschleiß zu ermöglichen, ist es erforderlich, dass die Antriebsklinke, die mit dem Antriebsritzel in Eingriff steht, in axialer Richtung mit der Anpressplatte beweglich ist. Die Antriebsklinke wirkt mit einem bei einer Betätigung der Kupplung relativbewegten Kupplungsteil, vorzugsweise der Anpressplatte zusammen. Sie kann insbesondere an einer Antriebsfeder angeordnet sein, die von dem Kupplungsteil, insbesondere von der Anpressplatte, bewegbar ist. Während einer Bewegung der Anpressplatte zur Gegenplatte kann die Antriebsfeder von der Anpressplatte derart relativpositioniert werden, dass die Antriebsklinke auf den Zähnen des Ritzels gleitet und bei einem vorgegebenen Verschleiß in eine Zahnlücke zwischen zwei Zähnen einrastet. Die Antriebsklinke nimmt beim nächsten Öffnungsvorgang der Reibungskupplung das Ritzel formschlüssig mit und verdreht dabei das Ritzel und damit die Spindel, wodurch die Spindelmutter entlang der Spindel bewegt wird und den Rampenring um einen entsprechenden Winkelbetrag verdreht, um die Reibungskupplung dadurch nachzustellen. Anders ausgedrückt wird die Antriebsklinke bei Verschleiß der Kupplung und dadurch zunehmendem Einrückweg der Anpressplatte relativ zum Antriebsritzel ausgelenkt, so dass das Antriebsritzel verdreht wird. Hierdurch wird die Spindelwelle angetrieben, das heißt der Schneckentrieb wird verdreht und somit die (rotatorisch fixierte) Spindelmutter translatorisch bewegt. Auf diese Weise wird Verschleiß der Kupplungsscheibe in Form von Positionsänderungen der Anpressplatte erfasst. Anders ausgedrückt wird der jeweilige Stellweg der Anpressplatte mittels der Antriebsklinke auf das Antriebsritzel übertragen und dieses dadurch angetrieben und zusammen mit der Spindelwelle rotiert. Eine derartige Anordnung wird auch als TAF (Travel Adjusted Flywheel) bezeichnet.

Vorteilhafte Ausführungsformen der Erfindung sind in den Unteransprüchen beansprucht und werden nachfolgend näher erläutert.

Nach einer Ausführungsform ist das Übertragungselement als Blechformteil ausgebildet. Es ist so als Massenbauteil einfach und kostengünstig in der erforderlichen Qualität herzustellen. Des Weiteren kann ein solches Blechformteil derart ausgebildet sein, dass es eine gewisse Elastizität und Flexibilität besitzt, was eine Einleitung von Momenten und außerzentrischen Kräften in die Spindelmutter, die zu deren Verkippen führen könnten, weiterhin verhindert. Das Übertragungselement kann insbesondere als Zugband oder als Zugblech ausgebildet sein.

Es ist insbesondere von Vorteil, wenn das Übertragungselement einen ersten Flansch aufweist, der eingerichtet ist, an Stirnfläche der Spindelmutter anzuliegen. Dieser erste Flansch ist derart ausgebildet und auf die Form der Spindelmutter abgestimmt, dass das Übertragungselement infolge einer translatorischen Bewegung der Spindelmutter von der Spindelmutter ohne Verkippen, d.h. ohne Übertragung von Drehmomenten quer zur Spindelwellenachse in Bewegungsrichtung geschoben wird. Der erste Flansch und die Stirnseite der Spindelmutter sind sphärisch oder teilsphärisch oder teilzylindermantelflächenförmig ausgebildet so dass der erste Flansch relativ zur Spindelmutter verkippen kann, ohne dabei auf diese Kräfte oder Momente zu übertragen. Alternativ oder zusätzlich ist der Flansch flexibel ausgebildet oder flexibel oder mittels eines Gelenks am Übertragungselement angeordnet was denselben Effekt zur Folge hat.
Nach einer Ausführungsform der Erfindung weist das Übertragungselement einen zweiten Flansch auf. Dieser ist eingerichtet, in eine Ausnehmung in dem Nachstellring einzugreifen. Auf diese Weise kann das Übertragungselement infolge einer translatorischen Bewegung der Spindelmutter den Nachstellring in eine Nachstellrichtung um die Rotationsachse der Kupplung verdrehen. Vorzugsweise greift der zweite Flansch formschlüssig in die Ausnehmung ein. Insbesondere kann der zweite Flansch in der Ausnehmung des Nachstellrings verkippbar sein. Auf diese Weise ist das Übertragungsmittel am Nachstellring flexibel angebunden. Eine Höhendifferenz zwischen Anbindung des Übertragungselements am Nachstellring und dem Spindeltrieb über den Verschleißbereich kann in vorteilhafter Weise ausgeglichen werden.
Es ist besonders vorteilhaft, wenn das Übertragungselement um eine Achse quer zur Kupplungsachse und zur Spindelwellenachse verkippbar ist. So können Positionsänderungen in axialer Richtung der Kupplung zwischen der Spindelwelle und dem Nachstellring infolge einer verschleißkompensierenden Nachstellung ausgeglichen werden. Das Übertragungselement kann insbesondere relativ zum Nachstellring und/oder zur Spindelwelle und damit zur Spindelmutter verkippbar sein.
Nach einer Ausführungsform der Erfindung ist die Spindelmutter gegenüber einem Bauteil der Reibkupplung gegen relative Rotation blockiert und insbesondere verdrehgesichert. So wird eine einwandfreie Funktion der Nachstelleinheit mittel des Übertragungselements gewährleistet, da die Spindelmutter gegen Verdrehen gesichert wird. Insbesondere kann die Spindelmutter mit dem Übertragungselement drehfest verbunden sein. Auf diese Weise sichert die Verbindung von Spindelmutter und Übertragungselement gegen ungewünschtes Verdrehen der Spindelmutter auf der Spindelwelle. Gesonderte weitere Teile zur Verdrehsicherung sind dann nicht erforderlich, so dass die Nachstelleinrichtung einfach und robust ist. Um eine verdrehsichere Verbindung von Spindelmutter und Übertragungselement auszubilden, kann die Spindelmutter zumindest eine Anlagefläche aufweisen, die an dem Übertragungselement anliegt und die Spindelmutter gegenüber dem Übertragungselement gegen Verdrehen sichert. Um ein Verdrehen der Spindelmutter zu unterbinden ist kann sich diese Anlagefläche insbesondere an einer am Übertragungselement ausgebildeten, insbesondere ausgeprägten Lasche abstützen.

Eine besonders montagefreundliche und robuste Ausführungsform wird erzielt, wenn der erste Flansch des Übertragungselements eine Ausnehmung aufweist, die von der Spindelwelle zumindest teilweise umgriffen ist. Man kann auch sagen, dass der die Ausnehmung umgebende Bereich des Flansches die Spindelmutter zumindest teilweise, vorzugsweise vollumfänglich umgreift.

Bei der Kraftübertragung von Spindeltrieb zu Verstellring kommt es bei bekannten Systemen unter Verwendung einer Mutter mit exzentrischem Mitnehmer zu einem Verkanten des Systems, wodurch die statische Nachstellung nicht gewährleistet ist. Mithilfe des Zugbandes wird die Vortriebskraft zentral auf die Mutter aufgebracht, sodass diese nicht mehr verkippen kann, wodurch ein Verspannen des Systems verhindert wird. Man kann auch sagen, dass die vorliegende Erfindung eine Möglichkeit zeigt, eine Kraft von dem Übertragungselement zentral in die Mutter einzuleiten, sodass diese nicht mehr verkippen und damit den Nachstellmechanismus verklemmen kann. Durch den Einsatz eines Zugbandes als Übertragungselement wird die für die Nachstellung erforderliche Verdrehkraft des Verstellrings zentral auf die Mutter eingeleitet. Das Zugband kann am Verstellring insbesondere flexibel angebunden sein, damit die Höhendifferenz zwischen Anbindung und Spindeltrieb über dem Verschleißbereich ausgeglichen werden kann. Weiterhin können das Zugband und die Mutter so zueinander angepasst sein, dass die Kraft zentral auf die Mutter eingeleitet wird. Somit verkippt diese nicht, wodurch der Wirkungsgrad des Spindeltriebs steigt. Da die Kraft mittels Zugband zentral in die Spindelmutter eingeleitet wird, kann deren Führungslänge verkürzt werden, wodurch auch die Spindel kürzer ausgeführt werden kann. Dies bringt wiederum Vorteile bezüglich der Bauteilfestigkeit unter Drehzahl. Um eine einwandfreie Funktion der Nachstelleinheit mit Zugband gewährleisten zu können muss darauf geachtet werden, dass die Mutter gegen Verdrehen gesichert wird. Um ein Verdrehen der Mutter zu unterbinden, kann diese mit zwei Flanken ausgeführt sein, von denen sich eine an einer aus dem Zugband ausgeprägten Lasche abstützt.

Die Erfindung wird nachfolgend mittels eines Ausführungsbeispiels anhand von Zeichnungen näher erläutert. Dabei zeigt:
- Fig. 1: eine Spindelmutter eines bekannten Nachstellsystems mit exzentrischen Mitnehmer,
- Fig. 2: eine schematische Schnittansicht eines Teils einer Reibungskupplung mit einem Drehschwingungsdämpfer nach der Erfindung,
- Fig. 3: eine Aufsicht auf eine Verstelleinheit des Drehschwingungsdämpfers der Erfindung,
- Fig. 4: eine perspektivische Ansicht einer Verstelleinheit des Drehschwingungsdämpfers der Erfindung, und
- Fig. 5: eine perspektivische Ansicht eines Übertragungselements.

Die Figuren sind lediglich schematischer Natur und dienen nur dem Verständnis der Erfindung. Die gleichen bzw. vergleichbaren Elemente sind mit denselben Bezugszeichen versehen.

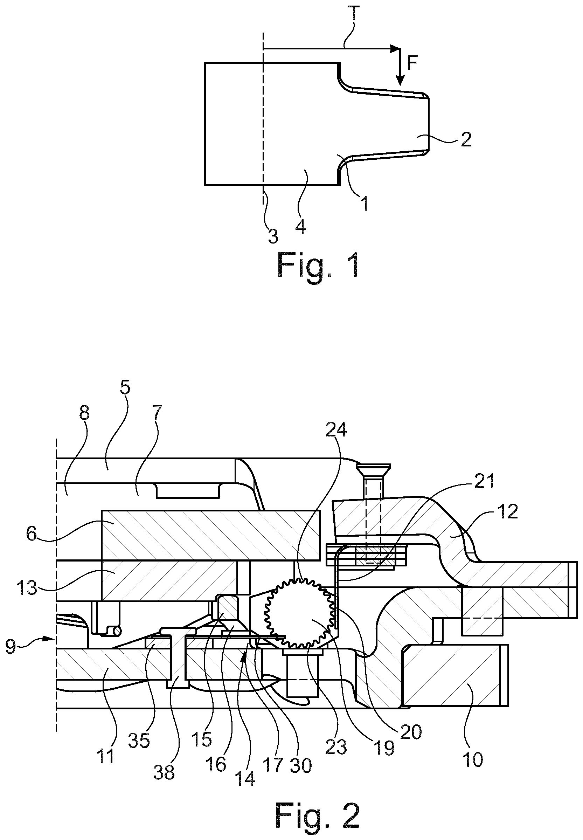

Figur 1 zeigt eine Spindelmutter 1 eines bekannten Nachstellsystems mit exzentrischen Mitnehmer 2, der sich quer zur Spindelmutterachse 3 erstreckt. Sie Spindelmutter 1 weist ein in Figur 1 angedeutetes Innengewinde 4 auf, das mit einem Außengewinde einer nicht gezeigten Spindelwelle zusammenwirkt. Der Mitnehmer 2 greift in eine dazu ausgebildete, nicht dargestellte Ausnehmung eines ebenfalls nicht dargestellten Verstellrings ein und verdreht diesen bei einer Bewegung der Spindelmutter 1 in Richtung der Spindelmutterachse 3. Der Krafteinleitungspunkt einer zwischen der Spindelmutter 1 und der Ausnehmung des Verstellrings dabei wirkenden Kraft K ist von der Spindelmutterachse 3 um einen Abstand r beabstandet. Infolgedessen übt die Kraft K auf die Spindelmutter 1 ein Moment M aus, das dem Produkt der Kraft K mit dem Abstand r entspricht und ein Verkippen der Spindelmutter 1 orthogonal zur Spindelmutterachse 3 bewirkt. Im Ergebnis sind die Spindelmutterachse 3 und die in der Spindelmutter 1 aufgenommene Spindelwelle nicht mehr parallel zueinander ausgerichtet, so dass beide Bauteile miteinander verklemmen und der Spindeltrieb blockieren kann.

Die Figur 2 zeigt eine schematische Schnittansicht eines Teils einer Reibungskupplung mit einem Drehschwingungsdämpfer nach der Erfindung. Die Reibungskupplung weist einen in der Figur nicht gezeigten Kupplungsdeckel und eine mit Hilfe einer Tellerfeder axial bewegbare Anpressplatte 5 auf, die mit Hilfe der Tellerfeder auf einer Gegenplatte 6 bewegt werden kann, um eine mit Reibbelägen 7 versehene Kupplungsscheibe 8 zwischen der Anpressplatte 5 und der Gegenplatte 6 zum Schließen der Reibungskupplung zu verpressen. Die Reibungskupplung ist ferner mit einem Drehschwingungsdämpfer 9 versehen, der einen Anlasserzahnkranz 10 und eine Schwungscheibe 11 aufweist. Die Schwungscheibe 11 ist mit einem Deckel 12 verbunden. In dem Deckel 12 ist ein Reibring 13 angeordnet.

Zum Nachstellen eines verschleißbedingten Fehlabstands der Anpressplatte 5 zur Gegenplatte 6 ist der Drehschwingungsdämpfer 9 mit einer Nachstelleinrichtung 14 versehen. Die Nachstelleinrichtung 14 weist einen in Umfangsrichtung verdrehbaren Verstellring 15 auf, der mit mehreren in axialer Richtung abstehenden Rampen 16 versehen ist. In diesem Ausführungsbeispiel ist der Verstellring 15 zwischen der Schwungscheibe 11 und dem Reibring 13 angeordnet. Die Schwungscheibe 11 weist mehrere in axialer Richtung abstehende Gegenrampen 17 auf.

Zum Verdrehen des Verstellrings 15 relativ zur Schwungscheibe 11 ist die Nachstelleinrichtung 14 mit einer am Verstellring 15 angreifenden Verstelleinheit versehen.

Diese weist eine auf eine Spindel 18 aufgeschraubte Spindelmutter 1 zum Verdrehen des Verstellrings 15 und ein drehfest mit der Spindel 18 verbundenes Ritzel 19 auf. Das Ritzel 19 kann von einer in seinen Umfang eingreifenden Antriebsklinke 20 verdreht werden. Die Antriebsklinke 20 ist an einer Antriebsfeder 21 angeordnet, die wiederum von der Anpressplatte 5 zu betätigen ist.

Die Antriebsfeder 21 ist durch ein Verbindungszapfen 22 mit der Anpressplatte 5 verbunden. Während einer Bewegung der Anpressplatte 5 zur Gegenplatte 6 wird die Antriebsfeder 22 mittels der Anpressplatte 5 relativ zum Deckel 12 und der damit verbundenen Nachstelleinrichtung 14 bewegt. Infolge dieser Bewegung gleitet die Antriebsklinke 20 auf den Zähnen 23 des Ritzels 19 und rastet bei einem vorgegebenen Verschleiß in eine Zahnlücke 24 zwischen zwei Zähnen 23 ein. Die Antriebsklinke 20 nimmt beim nächsten Öffnungsvorgang der Reibungskupplung das Ritzel 19 formschlüssig mit und verdreht dabei dieses mit der damit verbundenen Spindel 18. Die Spindelmutter 1 bewegt sich dadurch entlang der Spindel 18 in einer Verstellrichtung 25.

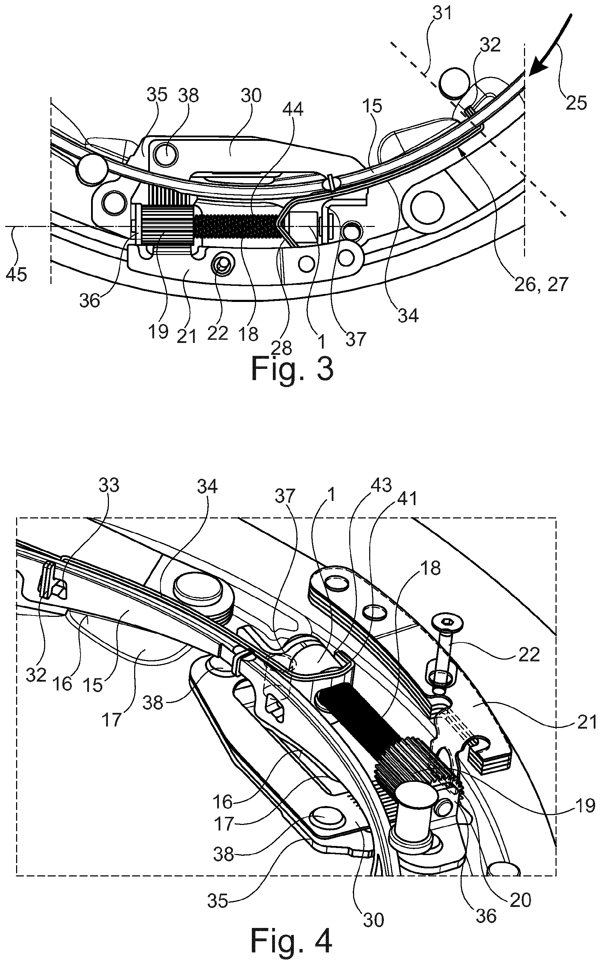

Die Nachstelleinrichtung 14 ist in den Figuren 3 und 4 in anderen Perspektiven dargestellt und gut zu erkennen. Die Spindelmutter 1 ist über ein Übertragungselement 26, hier als Blechelement 27 ausgeführt, mit dem Verstellring 15 wirkverbunden. Das Übertragungselement 26 weist spindelmutterseitig einen ersten Flansch 28 auf. Dieser ist mit einem Durchgangsloch 29 versehen, das von der Spindelwelle 18 derart durchgriffen ist, dass die Spindelwelle darin frei rotieren und in axialer Richtung verschoben werden kann. Der Flansch 28 liegt stirnseitig an der Spindelmutter 1 an, so dass von dieser eine Zugkraft in das Übertragungselement 26 eingeleitet werden kann, durch die das Übertragungselement 26 in Bewegungsrichtung 25 relativpositioniert werden und der auf der dem Flansch 28 gegenüberliegenden Seite mit dem Übertragungselement 26 angeschlossene Verstellring 15 in Nachstellrichtung 25 verdreht wird, um die Reibungskupplung dadurch nachzustellen.

Das Übertragungselement 26 ist mittels eines zweiten Flansches 32 am Verstellring 15 zu diesem in der nachfolgend beschriebenen Weise relativpositionierbar (verkippbar zum Ausgleich von Bewegungen des Verstellrings 15 relativ zur Nachstelleinrichtung 14) angebunden. Der zweite Flansch 32 wirkt als Zuganker und greift in eine Ausnehmung 33 des Verstellrings 15 ein.

Das Übertragungselement 26 ist als Zugband aus Blech ausgeführt. Zu dessen Herstellung wird zunächst ein Stanzvorgang vorgenommen, der in Kombination mit einigen nachträglichen Kaltumformungen dann zur Ausbildung des ersten Flansches 28 und des Zugankers 32 führt, sowie eine leichte Biegung des Mittelstücks 34 verursacht.

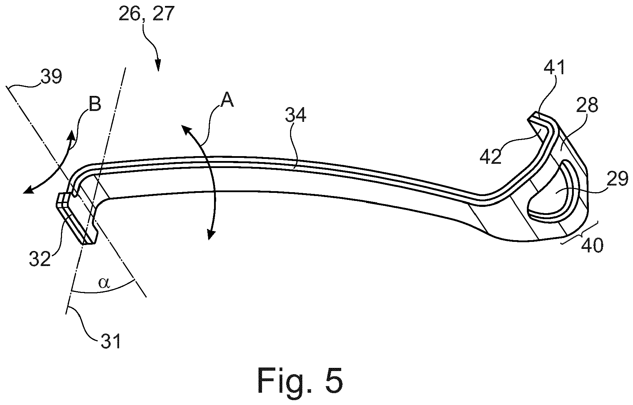

Dabei ist das Übertragungselement 26 um die Rotationsachse der Kupplung (in Figur 5 ist eine Parallele 39 zur Rotationsachse der Kupplung eingezeichnet und eine Bewegung darum durch den Pfeil B angedeutet) sowie um eine radiale Achse 31 verkippbar (diese Bewegung ist in Figur 5 mittels des Pfeils A angedeutet), um Relativbewegungen zwischen dem Nachstellring 15 und der Nachstelleinrichtung 14 aufgrund von Rotation des Nachstellrings 15 um die Kupplungsachse und einer daraus resultierenden Positionsänderung in Richtung der Kupplungsachse auszugleichen.

Die Nachstelleinrichtung 14 ist mittels einer als Blechformteil gebildeten Aufnahme 35 aufgenommen. Diese ist besonders gut in den Figuren 3 und 4 zu erkennen und weist zwei endseitige Laschen 36, 37 auf, in denen die Spindelwelle 18 um ihre Spindelwellenachse drehbar, in deren Richtung jedoch ortsfest und unverschiebbar gelagert ist. Die Aufnahme ist mittels Nieten 38 an der Schwungscheibe 11 festgelegt.

Figur 2 zeigt, dass eine in den Umfang des Ritzels 19 eingreifende und auf der Schwungscheibe 11 befestigte Sperrklinke 30 vorgesehen ist, die eine unbeabsichtigte Rückdrehung des Ritzels 19 sperrt.

Der Flansch 28 des Übertragungselements 26 ist in Figur 5 besonders gut zu erkennen. Er ist im Wesentlichen U-förmig geformt und besitzt einen mittigen teilzylinderförmigen Anlageabschnitt 40 zur Anlage an der Stirnfläche der Spindelmutter 1. Die Spindelmutter 1 kann auf diesem teilzylinderförmigen Abschnitt 40 gegenüber dem Flansch 28 in zwei Raumrichtungen abrollen und verschwenken, so dass ein Verkanten der Spindelmutter 1 gegenüber der Spindelwelle 18 verhindert wird. Ein distales Ende 41 bildet eine abgeflachte Anlagefläche 42, die an einer Abflachung 43 der Spindelmutter 1 anliegt und ein Verdrehen dieser relativ zum Übertragungselement 26 verhindert. Bei einer nicht in den Figuren dargestellten Ausführungsform ist anstelle des teilzylinderförmigen Anlageabschnitts 40 ein teilsphärischer Anlageabschnitt vorgesehen, so dass die Spindelmutter in drei Raumrichtungen gegenüber dem Flansch 28 verschwenkbar ist und über diesen keine Kippmomente in die Spindelmutter eingeleitet werden können. Man kann auch sagen, dass der teilzylinderförmige oder teilsphärische Anlageabschnitt 40 eine Art Scharnier zwischen Spindelmutter 1 und Übertragungselement 26 bildet.

### Bezugszeichenliste

- 1: Spindelmutter
- 2: Mitnehmer
- 3: Spindelmutterachse
- 4: Innengewinde
- 5: Anpressplatte
- 6: Gegenplatte
- 7: Reibbelag
- 8: Kupplungsscheibe
- 9: Drehschwingungsdämpfer
- 10: Anlasserzahnkranz
- 11: Schwungscheibe
- 12: Deckel
- 13: Reibring
- 14: Nachstelleinrichtung
- 15: Verstellring, Nachstellring
- 16: Rampe
- 17: Gegenrampe
- 18: Spindel, Spindelwelle
- 19: Ritzel
- 20: Antriebsklinke
- 21: Antriebsfeder
- 22: Verbindungszapfen
- 23: Zahn
- 24: Zahnlücke
- 25: Verstellrichtung
- 26: Übertragungselement
- 27: Blechelement
- 28: Flansch
- 29: Durchgangsloch
- 30: Sperrklinke
- 31: radiale Achse
- 32: Flansch
- 33: Ausnehmung
- 34: Mittelstück
- 35: Aufnahme
- 36: Lasche
- 37: Lasche
- 38: Niet
- 39: Parallele
- 40: Anlageabschnitt
- 41: distales Ende
- 42: Anlagefläche
- 43: Abflachung
- 44: Spindelgewinde
- 45: Spindelwellenachse
- A: Kippbewegung
- B: Kippbewegung
- K: Kraft
- r: Abstand
- M: Moment (K x r)

## Patentansprüche

1. Drehschwingungsdämpfer (9), insbesondere Einmassenschwungrad oder Zweimassenschwungrad, mit einer weggesteuerten Nachstelleinrichtung (14) zum Nachstellen eines verschleißbedingten Fehlabstands einer Anpressplatte (5) zu einer Gegenplatte (6) einer Reibungskupplung eines Kraftfahrzeugs, wobei die Nachstelleinrichtung (14) aufweist
- eine Spindelwelle (18) mit einem Spindelwellengewinde (44),
- eine mit dem Spindelwellengewinde (44) der Spindelwelle (18) zusammenwirkende Spindelmutter (1), die infolge einer Verdrehung der Spindelwelle (18) translatorisch bewegbar ist,
- ein Antriebsritzel (19) zum Antreiben der Spindelwelle (18),
- eine Antriebsklinke (20) zum weggesteuerten Antreiben des Antriebsritzels (19) und
- eine Aufnahme (35) für die Spindelwelle (18), die diese axial fixiert, wobei die Spindelmutter (1) mit einem Nachstellring (15) wirkverbunden ist, der um eine quer zur Spindelwelle (18) ausgerichtete Rotationsachse (39) der Kupplung verdrehbar und infolge einer Verdrehung um diese Rotationsachse (39) zum Nachstellen des verschleißbedingten Fehlabstand in Richtung der Rotationsachse (39) der Kupplung positionierbar ist, **dadurch gekennzeichnet, dass** die Antriebsklinke (20) mit der Anpressplatte (5) zusammenwirkt und mit dieser axial bewegbar ist und,
dass die Spindelmutter (1) mittels eines Übertragungselements (26, 27) mit dem Nachstellring (15) derart wirkverbunden ist, dass Zugkräfte in Richtung der Spindelwellenachse (45) auf die Spindelmutter (1) übertragbar sind und Drehmomente quer zur Spindelwellenachse (45) nicht auf die Spindelmutter (1) übertragbar sind, wobei ein erster Flansch (28) des Übertragungselements (26, 27) und eine Stirnseite der Spindelmutter (1) sphärisch oder teilsphärisch oder teilzylindermantelflächenförmig ausgebildet sind und/oder der erste Flansch (28) flexibel ausgebildet ist und/oder der erste Flansch (28) flexibel oder mittels eines Gelenks am Übertragungselement (26, 27) angeordnet ist.

2. Drehschwingungsdämpfer (9) nach Anspruch 1, **dadurch gekennzeichnet, dass** das Übertragungselement (26, 27) als Blechformteil ausgebildet ist.

3. Drehschwingungsdämpfer (9) nach Anspruch 1 oder 2, **dadurch gekennzeichnet, dass** der erste Flansch (28) an der Stirnseite der Spindelmutter (1) anliegt.

4. Drehschwingungsdämpfer (9) nach einem der vorstehenden Ansprüche, **dadurch gekennzeichnet, dass** das Übertragungselement (26, 27) einen zweiten Flansch (32) aufweist, der eingerichtet ist, in eine Ausnehmung (33) in dem Nachstellring (15) einzugreifen, sodass das Übertragungselement (26, 27) infolge einer translatorischen Bewegung der Spindelmutter (1) den Nachstellring (15) in eine Nachstellrichtung (25) um die Rotationsachse (39) der Kupplung verdreht.

5. Drehschwingungsdämpfer (9) nach Anspruch 4, **dadurch gekennzeichnet, dass** das Übertragungselement (26, 27) um eine Achse (31) quer zur Kupplungsachse (39) und zur Spindelwellenachse (45) verkippbar ist, um Positionsänderungen in axialer Richtung der Kupplung zwischen der Spindelwelle (18) und dem Nachstellring (15) infolge einer verschleißkompensierenden Nachstellung auszugleichen.

6. Drehschwingungsdämpfer (9) nach Anspruch 4, **dadurch gekennzeichnet, dass** die Spindelmutter (1) gegenüber einem Bauteil der Reibkupplung gegen relative Rotation blockiert ist.

7. Drehschwingungsdämpfer (9) nach einem der Ansprüche 4 bis 6, **dadurch gekennzeichnet, dass** die Spindelmutter (1) mit dem Übertragungselement (26, 27) drehfest verbunden ist.

8. Drehschwingungsdämpfer (9) nach einem der vorstehenden Ansprüche, **dadurch gekennzeichnet, dass** die Spindelmutter (1) zumindest eine Anlagefläche (43) aufweist, die an dem Übertragungselement (26, 27) anliegt und die Spindelmutter (1) gegenüber dem Übertragungselement (26, 27) gegen Verdrehen sichert.

9. Drehschwingungsdämpfer (9) nach einem der vorstehenden Ansprüche, **dadurch gekennzeichnet, dass** der erste Flansch (28) des Übertragungselements (26, 27) eine Ausnehmung (29) aufweist, die von der Spindelwelle (18) zumindest teilweise umgriffen ist.

10. Kupplung, insbesondere Reibkupplung, mit einem Drehschwingungsdämpfer (9) nach einem der vorstehenden Ansprüche.

## Claims

1. Torsional vibration damper (9), in particular single-mass flywheel or dual-mass flywheel, having a displacement-controlled adjusting device (14) for adjusting a wear-induced faulty spacing of a pressure plate (5) from a counterplate (6) of a friction clutch of a motor vehicle, the adjusting device (14) having
- a spindle shaft (18) with a spindle shaft thread (44),
- a spindle nut (1) which interacts with the spindle shaft thread (44) of the spindle shaft (18) and can be moved translationally as a consequence of a rotation of the spindle shaft (18),
- a drive pinion (19) for driving the spindle shaft (18),
- a drive pawl (20) for driving the drive pinion (19) in a displacement-controlled manner, and
- a receptacle (35) for the spindle shaft (18), which receptacle (35) fixes the said spindle shaft (18) axially, the spindle nut (1) being operatively connected to an adjusting ring (15) which can be rotated about a rotational axis (39) of the clutch, which rotational axis (39) is oriented transversely with respect to the spindle shaft (18), and can be positioned as a consequence of a rotation about the said rotational axis (39) for adjusting the wear-induced faulty spacing in the direction of the rotational axis (39) of the clutch, **characterized in that** the drive pawl (20) interacts with the pressure plate (5) and can be moved axially with the latter, and **in that** the spindle nut (1) is operatively connected by means of a transmission element (26, 27) to the adjusting ring (15) in such a way that tensile forces in the direction of the spindle shaft axis (45) can be transmitted to the spindle nut (1) and torques transversely with respect to the spindle shaft axis (45) cannot be transmitted to the spindle nut (1), a first flange (28) of the transmission element (26, 27) and an end side of the spindle nut (1) being of spherical or partially spherical or partially cylinder shell-shaped configuration and/or the first flange (28) being of flexible configuration and/or the first flange (28) being arranged on the transmission element (26, 27) flexibly or by means of a joint.

2. Torsional vibration damper (9) according to Claim 1, **characterized in that** the transmission element (26, 27) is configured as a shaped sheet-metal part.

3. Torsional vibration damper (9) according to Claim 1 or 2, **characterized in that** the first flange (28) bears against the end side of the spindle nut (1).

4. Torsional vibration damper (9) according to one of the preceding claims, **characterized in that** the transmission element (26, 27) has a second flange (32) which is set up to engage into a recess (33) in the adjusting ring (15), with the result that, as a consequence of a translational movement of the spindle nut (1), the transmission element (26, 27) rotates the adjusting ring (15) in an adjusting direction (25) about the rotational axis (39) of the clutch.

5. Torsional vibration damper (9) according to Claim 4, **characterized in that** the transmission element (26, 27) can be tilted about an axis (31) transversely with respect to the clutch axis (39) and with respect to the spindle shaft axis (45), in order to compensate for positional changes in the axial direction of the clutch between the spindle shaft (18) and the adjusting ring (15) as a consequence of a wear-compensating adjustment.

6. Torsional vibration damper (9) according to Claim 4, **characterized in that** the spindle nut (1) is blocked against relative rotation with respect to a component of the friction clutch.

7. Torsional vibration damper (9) according to one of Claims 4 to 6, **characterized in that** the spindle nut (1) is connected fixedly to the transmission element (26, 27) so as to rotate with it.

8. Torsional vibration damper (9) according to one of the preceding claims, **characterized in that** the spindle nut (1) has at least one bearing face (43) which bears against the transmission element (26, 27) and secures the spindle nut (1) against rotation with respect to the transmission element (26, 27).

9. Torsional vibration damper (9) according to one of the preceding claims, **characterized in that** the first flange (28) of the transmission element (26, 27) has a recess (29) which is engaged around at least partially by the spindle shaft (18).

10. Clutch, in particular friction clutch, having a torsional vibration damper (9) according to one of the preceding claims.

## Revendications

1. Amortisseur de vibrations de torsion (9), en particulier volant d'inertie simple ou double, doté d'un dispositif de réglage commandé à distance (14) pour la correction de l'écart dû à l'usure entre une plaque de compression (5) et une contre-plaque (6) d'un embrayage à friction d'un véhicule, dans lequel le dispositif de réglage (14) comporte :
- un arbre de broche (18) doté d'un filetage d'arbre de broche (44),
- un écrou de broche (1) en coopération avec le filetage (44) de l'arbre de broche (18), mobile en translation suite à une torsion de l'arbre de broche (18),
- un pignon moteur (19) pour l'entraînement de l'arbre de broche (18),
- un cliquet d'entraînement (20) pour l'entraînement commandé à distance du pignon moteur (19) et
- une admission (35) pour l'arbre de broche (18), fixant celui-ci axialement, dans lequel l'écrou de broche (1) est connecté de façon opérationnelle à une bague de réajustement (15), laquelle peut tourner autour d'un axe de rotation de l'embrayage (39) disposé transversalement à l'arbre de broche (18) et peut être positionnée du fait d'une torsion autour de cet axe de rotation (39) afin de corriger un l'écart dû à l'usure dans la direction de l'axe de rotation (39), **caractérisé en ce que** le cliquet d'entraînement (20) coopère avec la plaque de compression (5) et est axialement mobile avec celle-ci, et **en ce que** l'écrou de broche (1) est connecté de façon opérationnelle à la bague de réajustement (15) au moyen d'un élément de transmission (26, 27) de telle manière que les forces de traction dans la direction de l'axe de l'arbre de broche (45) soient transmissibles à l'écrou de broche (1) et que les moments de torsion transversaux à l'axe de l'arbre de broche (45) ne soient pas transmissibles à l'écrou de broche (1), dans lequel une première bride (28) de l'élément de transmission (26, 27) et une façade de l'écrou de broche (1) sont conçues pour être de forme sphérique, partiellement sphérique ou de surface d'enveloppe de cylindre partielle et/ou la première bride (28) est conçue pour être flexible et/ou la première bride (28) est agencée sur l'élément de transmission (26, 27) de manière flexible ou au moyen d'une articulation.

2. Amortisseur de vibrations de torsion (9) selon la revendication 1, **caractérisé en ce que** l'élément de transmission (26, 27) est conçu comme pièce de tôlerie.

3. Amortisseur de vibrations de torsion (9) selon la revendication 1 ou 2, **caractérisé en ce que** la première bride (28) est adjacente à une façade de l'écrou de broche (1).

4. Amortisseur de vibrations de torsion (9) selon l'une des revendications précédentes, **caractérisé en ce que** l'élément de transmission (26, 27) comporte une seconde bride (32), laquelle est disposée pour s'engager dans une prise (33) dans la bague de réajustement (15), de sorte que l'élément de transmission (26, 27) exerce une torsion sur la bague de réajustement (15) dans une direction de correction (25) autour de l'axe de rotation (39) de l'embrayage suite à un mouvement de translation de l'écrou de broche (1).

5. Amortisseur de vibrations de torsion (9) selon la revendication 4, **caractérisé en ce que** l'élément de transmission (26, 27) peut basculer autour d'un axe (31) transversal à l'axe de l'embrayage (39) et à l'axe de broche de rotation (45), afin d'effectuer des modifications de position, dans la direction axiale de l'embrayage, entre l'axe de broche (18) et la bague de réajustement (15) à la suite d'un réajustement pour compensation de l'usure.

6. Amortisseur de vibrations de torsion (9) selon la revendication 4, **caractérisé en ce que** l'écrou de broche (1) est bloqué contre la rotation par rapport à un composant de l'embrayage à friction.

7. Amortisseur de vibrations de torsion (9) selon l'une des revendications 4 à 6, **caractérisé en ce que** l'écrou de broche (1) est fixé sans rotation possible à l'élément de transmission (26, 27).

8. Amortisseur de vibrations de torsion (9) selon l'une des revendications précédentes, **caractérisé en ce que** l'écrou de broche (1) comporte au moins une surface de contact (43) adjacente à l'élément de transmission (26, 27) et assurant l'écrou de broche contre la torsion par rapport à l'élément de transmission (26, 27).

9. Amortisseur de vibrations de torsion (9) selon l'une des revendications précédentes, **caractérisé en ce que** la première bride (28) de l'élément de transmission (26, 27) comporte une prise (29) entourée au moins partiellement par l'axe de broche (18).

10. Embrayage, en particulier embrayage à friction, doté d'un amortisseur de vibrations de torsion (9) selon l'une des revendications précédentes.
